# EUROPÄISCHE PATENTANMELDUNG

(11) **EP 1 041 517 A2**
(43) Veröffentlichungstag der Anmeldung: **04.10.2000**
(21) Anmeldenummer: 00105890.8
(22) Anmeldetag: 20.03.2000
(51) Int. Cl.: G07C 9/00, E05B 49/00

(54) **Sprachgesteuerte Einrichtung**

(30) Priorität: 24.03.1999 DE 19913208
(71) Anmelder: Marquardt, Stefan, 72488 Sigmaringen (DE)
(72) Erfinder: Schaal, Gerhard, 72517 Sigmaringendorf (DE); Marquardt, Stephan, 72488 Sigmaringen (DE)
(74) Vertreter: Ostertag, Ulrich

(57) **Zusammenfassung**

Eine sprachgesteuerte Einrichtung (1) weist eine Sprachsteuerungsvorrichtung (14) auf. Diese umfaßt: ein Mikrofon (18), ein Spracherkennungsmodul (35) sowie einen Schlüsselwortspeicher (19). Der Schlüsselwortspeicher (19) ist wiederbeschreibbar. Die Sprachsteuerungsvorrichtung (14) weist eine Aufnahmevorrichtung (21) zur Aufnahme von Schlüsselwortsequenzen auf. Diese weist ihrerseits ein Aufnahmemikrofon (22), eine Schlüsselwort-Wiedergabeeinheit (23), ein Bedienfeld (25) und eine Anzeigeeinheit (27) auf. Eine derartige sprachgesteuerte Einrichtung (1) ist individuell an den jeweiligen Benutzer anpaßbar.

## Beschreibung

Die Erfindung betrifft eine sprachgesteuerte Einrichtung mit einer Sprachsteuerungsvorrichtung, die umfaßt: ein Mikrofon, ein Spracherkennungsmodul sowie einen Schlüsselwortspeicher.

Eine derartige Einrichtung ist aus der DE 40 27 491 C2 mit festen werkseitig vorbelegten Schlüsselworten bekannt.

Um bei dieser bekannten sprachgesteuerten Einrichtung eine Bedienbarkeit für eine Mehrzahl von Benutzern zu gewährleisten, muß die Lautähnlichkeitsprüfung zwischen dem vom Benutzer gesprochenen Wort und einem im Schlüsselwortspeicher abgelegten Schlüsselwort mit großer Übereinstimmungstoleranz erfolgen. Diese Einrichtungen erlauben es nicht, durch eigene Festlegung bestimmter Schlüsselworte und/oder auch Stimmerkennung bestimmte Personen ausschließlich zu autorisieren. Eine derartige Autorisierung erfolgt bei der DE 40 27 491 C2 mittels eines zusätzlich vom Benutzer mitgeführten Transponders, der einen Datenaustausch mit der Sprachsteuerungsvorrichtung durchführt. Das Erfordernis eines derartigen Transponders hat mehrere Nachteile: So darf der Transponder vom Benutzer nicht vergessen werden, benötigt eine autarke Stromversorgung und verteuert die Herstellungskosten der sprachgesteuerten Einrichtung.

Es ist daher die Aufgabe der vorliegenden Erfindung, eine sprachgesteuerten Einrichtung der eingangs genannten Art derart weiterzubilden, daß die Sprachsteuerung an einen Benutzer individuell anpaßbar ist.

Diese Aufgabe wird erfindungsgemäß dadurch gelöst, daß der Schlüsselwortspeicher wiederbeschreibbar ist und daß die Sprachsteuerungsvorrichtung eine Aufnahmevorrichtung zur Aufnahme von Schlüsselwortsequenzen aufweist, die ihrerseits ein Aufnahmemikrofon, eine Schlüsselwort-Wiedergabeeinheit, ein Bedienfeld und eine Anzeigeeinheit aufweist.

Mit einer derartigen Aufnahmevorrichtung ist die individuelle Aufnahme von Schlüsselworten möglich. Diese Lösung ist zwar in der Regel teurer als bei einer werkseitigen Vorbelegung der Schlüsselworte, bringt aber eine erhöhte sicherheit der erfindungsgemäßen sprachgesteuerten Einrichtung mit sich, da der Benutzer nur ihm bekannte Schlüsselworte aufsprechen kann und zusätzlich das Spracherkennungsmodul der Sprachsteuerungsvorrichtung so ausgelegt werden kann, daß neben der Schlüsselworterkennung auch eine Stimmerkennung stattfindet.

Die Sprachsteuerungsvorrichtung kann mit der Aufnahmevorrichtung ein in die sprachgesteuerte Einrichtung eingebautes integriertes elektronisches Bauelement bilden. Dabei kann auf bekannte und in der Regel auf Mikrochips integrierbare Komponenten zurückgegriffen werden. Die Sprachsteuerungsvorrichtung hat dann nur einen geringen Platzbedarf und ist relativ kostengünstig.

Die Aufnahmevorrichtung kann alternativ ein mit der Sprachsteuerungsvorrichtung steckbar verbundenes Bauelement sein. Dadurch ist es möglich, eine Aufnahmevorrichtung für eine Mehrzahl von Sprachsteuerungsvorrichtungen zu verwenden. Dies ist bei größeren Anlagen, bei denen viele gleichartige sprachgesteuerte Einrichtungen vorliegen, ein Kostenvorteil. Die Aufnahmevorrichtung wird dabei zentral zugänglich aufbewahrt, so daß sie einer Mehrzahl von Benutzern zur Aufnahme von Schlüsselworten zugänglich ist.

Bevorzugt weist die sprachgesteuerte Einrichtung eine mit der Sprachsteuerungsvorrichtung verbundene Stromversorgungseinheit mit mindestens einer Solarzelle und mindestens einem Akkumulator auf. Dadurch ist eine vom Stromnetz unabhängige Stromversorgung der sprachgesteuerten Einrichtung möglich. Aufwendige Strominstallationen, d.h. der Anschluß an ein Stromnetz, entfallen.

Die sprachgesteuerte Einrichtung kann ein Gehäuse, mindestens eine durch eine Zugangstür oder -klappe verschließbare Zugangsöffnung und eine Verriegelungseinrichtung für die Zugangstür oder -klappe aufweisen, wobei die Verriegelungseinrichtung durch die Sprachsteuerungsvorrichtung gesteuert ist. Die Sprachsteuerung gewährleistet dabei, daß nur autorisierte Personen, d.h. Personen, die Kenntnis von den Schlüsselworten haben bzw. deren Stimme erkannt wird, die sprachgesteuerte Einrichtung öffnen können. Ein mechanischer Schlüssel ist nicht erforderlich. Das Ver- bzw. Entriegeln kann ohne manuelle Tätigkeit des Benutzers erfolgen. Es ist dann z.B. durch Sprechen eines bestimmten Schlüsselwortes möglich, die sprachgesteuerte Einrichtung nur für eine bestimmte Zeitdauer zu ver- bzw. entriegeln. Dies ist z.B. bei einer vorrübergehenden Abwesenheit des Benutzers vorteilhaft. Auch kann die Sprachsteuerungsvorrichtung so ausgelegt sein, daß ein Öffnen der erfindungsgemäßen sprachgesteuerten Einrichtung nach einer entsprechenden Spracheingabe nur zu bestimmten Tageszeiten erfolgen kann. Derartige Sonderfunktionen können durch die Sprachsteuerungsvorrichtung auf einfache Weise wieder gelöscht bzw. geändert werden.

Die Verriegelungseinrichtung kann zusätzlich manuell betätigbar sein. Bei einem Ausfall der sprachgesteuerten Verriegelungseinrichtung ist somit als Notbehelf eine mechanische Ver- bzw. Entriegelung möglich. Auch kann auf diese Weise vorübergehend die "Schlüsselgewalt" auf andere Personen übertragen werden, ohne daß später neue Schlüsselworte eingegeben werden müssen.

Die sprachgesteuerte Einrichtung kann ein Briefkasten sein. Bei bekannten Briefkästen ist in der Regel die Entnahmetür, d.h. eine der Zugangsöffnungen, mit einer durch einen Schlüssel und ein Schloß gebildeten Verriegelungseinrichtung manuell ver- bzw. entriegelbar. Ein Nachteil einer derartigen Verriegelungseinrichtung ist, daß zum Öffnen des Briefkastens immer der passende Schlüssel notwendig ist. Wird dieser vom Benutzer vergessen, ist der Briefkasten nicht zu öffnen, so daß eingeworfene Sendungen nicht entnommen werden können. Andere manuelle Verriegelungseinrichtungen, die keines Schlüssels bedürfen, z.B. ein einfacher Riegel, können auch von nicht autorisierten Personen geöffnet werden, was gerade bei einem Briefkasten unerwünscht ist. Generell haben die bei Briefkästen bekannten manuell zu betätigenden Verriegelungseinrichtungen den Nachteil, daß sie bei ungünstigen Verhältnissen, z.B. einem dunklen Hausflur, nur sehr unbequem zu bedienen sind. Diese Nachteile werden durch den erfindungsgemäßen sprachgesteuerten Briefkasten beseitigt, da die Öffnung mindestens der Zugangstür des Briefkastens nur durch eine dazu autorisierte Person auf möglichst bequeme Weise erfolgen kann.

Ausführungsbeispiele der Erfindung werden nachfolgend anhand der Zeichnung näher erläutert; es zeigen:
- Figur 1: eine perspektivische Ansicht eines Briefkastens mit sprachgesteuert ver- und entriegelbarer Einwurfklappe- und Entnahmetür;
- Figur 2: ein Blockschaltbild der Sprachsteuerungsvorrichtung des Briefkastens, wobei die Verriegelungseinrichtung der Einwurfklappe- bzw. der Entnahmetür detaillierter im Schnitt dargestellt ist; und
- Figur 3: eine Ansicht einer abgewandelten Entnahmetür eines sprachgesteuert ver- und entriegelbaren Briefkastens.

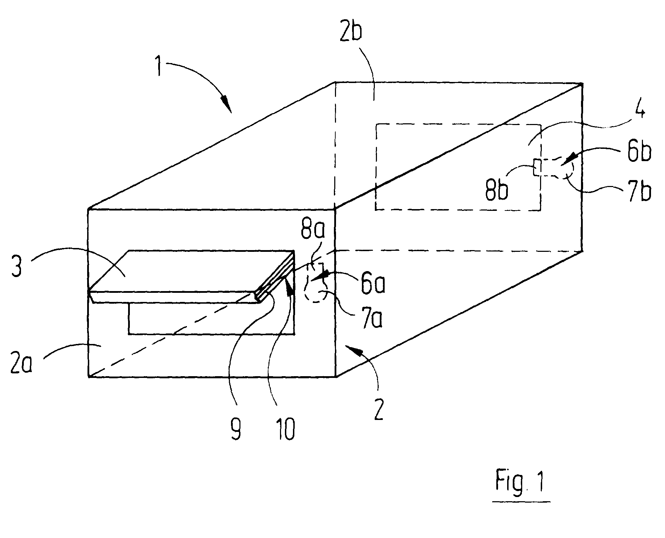

Ein sprachgesteuert ver- und entriegelbarer Briefkasten ist in der perspektivischen Darstellung der Figur 1 insgesamt mit dem Bezugszeichen 1 versehen. Der Briefkasten 1, der ein im wesentlichen kastenförmiges Gehäuse 2 aus Metallblech umfaßt, ist zum Einsetzen in eine in Figur 1 nicht dargestellte Gebäudewand vorgesehen.

Zum Einwerfen von Post- und sonstigen Wurfsendungen in den Briefkasten 1 weist dieser eine in einer vorderen Gehäusewand 2a des Gehäuses 2 angeordnete Einwurfklappe 3 auf. Diese ist in Figur 1 in einer aufgeklappten Position dargestellt, in der sie gegenüber der geschlossenen Position um ein nicht dargestelltes Scharnier des Briefkastens 1 verschwenkt ist.

Zur Entnahme von in den Briefkasten 1 eingeworfenen Sendungen weist dieser in einer hinteren Gehäusewand 2b des Gehäuses 2 als weitere Zugangsöffnung eine Entnahmetür 4 auf. Diese ist in der perspektivischen Darstellung der Figur 1 verdeckt und daher gestrichelt dargestellt. Die Entnahmetür 4 läßt sich analog zur Einwurfklappe 3 um ein nicht dargestelltes Scharnier des Briefkastens 1 verschwenken und damit öffnen.

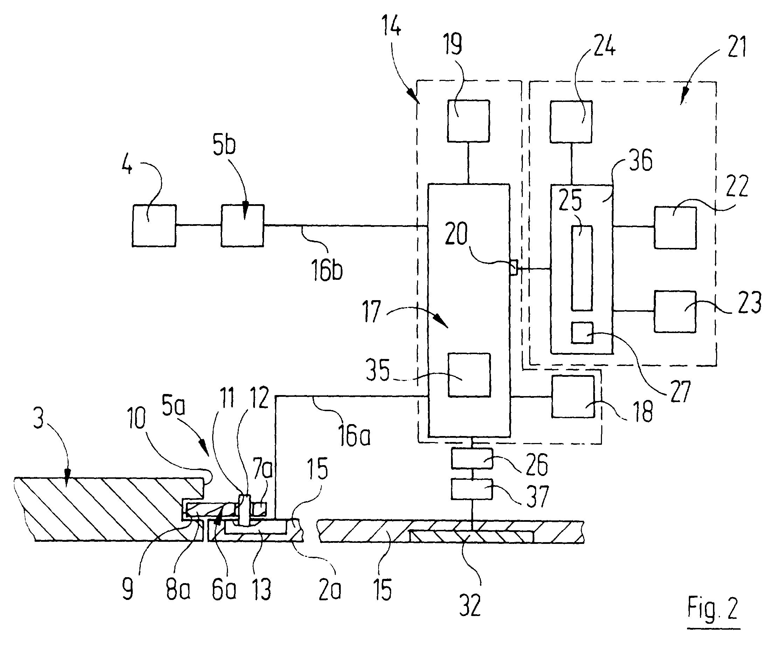

Sowohl die Einwurfklappe 3 als auch die Entnahmetür 4 weisen eine gleichartig aufgebaute sprachgesteuerte Verriegelungseinrichtung 5 auf (vgl. Fig. 2). Nachfolgend werden mit dem Index "a" die zur Verriegelungeinrichtung 5a der Einwurfklappe 3 gehörenden Bauteile und mit dem Index "b" die zur Verriegelungseinrichtung 5b der Entnahmetür 4 gehörenden Bauteile bezeichnet. Der Index wird weggelassen, wenn auf beide Verriegelungseinrichtungen 5a und 5b verwiesen wird oder wenn die Zuordnung des Bauteils zur jeweiligen Verriegelungseinrichtung 5a bzw. 5b eindeutig ist.

Die Verriegelungseinrichtung 5a der Einwurfklappe 3 ist im Blockschaltbild der Figur 2 detaillierter dargestellt und wird nachfolgend beschrieben:

Sie umfaßt einen Riegel 6a, der in der Darstellung der Figur 2 in der Schließstellung gezeigt ist. Zur Illustration sind in der Figur 1 die normalerweise nicht sichtbaren Riegel 6a, 6b der Verriegelungseinrichtungen 5a, 5b der Einwurfklappe 3 sowie der Entnahmetür 4 gestrichelt dargestellt, wobei der Riegel 6a der Einwurfklappe 3 dabei in der Entriegelungsposition steht und der Riegel 6b der Entnahmetür 4 in der Verriegelungsposition.

Wie der Figur 1 weiterhin zu entnehmen ist, hat der Riegel 6 einen im wesentlichen runden Grundkörper 7 mit einer radial über den Umfang des Grundkörpers 7 hinausstehenden Schließnase 8.

Wie in Figur 2 gezeigt, greift in der Verriegelungsposition die Schließnase 8a des Riegels 6a in eine die Schließnase 8a aufnehmende Nut 9 ein, die längs einer seitlichen Außenkante 10 der Einwurfklappe 3 ausgebildet ist.

Der Riegel 6a ist zwischen der Verriegelungs- und der Entriegelungsposition um eine Achse senkrecht zur Front- bzw. Rückseite des Briefkastens 1 drehbar. Dazu weist der Riegel 6a eine Bohrung 11 auf, mit der er auf eine Welle 12 eines elektromagnetisch ansteuerbaren Drehglieds 13 drehfest gesteckt ist. Das Drehglied 13 ist an der Innenseite der vorderen Gehäusewand 2a des Briefkastens 1 in nicht näher dargestellter Weise angebracht.

Das Drehglied 13 ist über eine Steuerleitung 16a mittels einer im Briefkasten 1 angeordneten Sprachsteuerungsvorrichtung 14, die noch beschrieben wird, zum Ver- bzw. Entriegeln des Riegels 6a ansteuerbar.

In den Ruhepositionen des Riegels 6a, d.h. in der Verriegelungsposition (vgl. Fig. 2) oder in der Entriegelungsposition (vgl. Fig. 1) fließt kein Strom durch den Elektromagneten des Drehglieds 13. Es versteht sich, daß durch entsprechende Vorkehrungen, z.B. mechanische Anschläge, erreicht wird, daß der Riegel 6a in seinen Endpositionen sicher gehalten wird.

Zum Ent- bzw. Verriegeln des Riegels 6a wird der Elektromagnet des Drehglieds 13 durch einen Stromfluß in der Steuerleitung 16a aktiviert und das Drehglied 13 verdreht dann den Riegel 6a in seine Entriegelungs- bzw. Verriegelungsposition.

An eine Sprachsteuerungs-Zentraleinheit 17, die die zentrale Baueinheit der Sprachsteuerungsvorrichtung 14 ist, ist ein Mikrofon 18 angeschlossen, über das eine Spracheingabe, d.h. eine Eingabe von Lauten, Worten oder Wortsequenzen, von der Außenseite des Briefkastens 1 her möglich ist. Ferner ist die Sprachsteuerungs-Zentraleinheit 17 mit einem wiederbeschreibbaren Schlüsselwortspeicher 19 verbunden. In die Sprachsteuerungs-Zentraleinheit 17 ist ein Spracherkennungsmodul 35 integriert.

Zur Belegung des Schlüsselwortspeichers 19 mit Schlüsselworten ist die Sprachsteuerungs-Zentraleinheit 17 über eine Steckkupplung 20 mit einer Aufnahmevorrichtung 21 zur Lautaufnahme von Schlüsselworten lösbar verbunden.

Das zentrale Bauteil der Aufnahmevorrichtung 21 ist eine Aufnahme-Zentraleinheit 36. An diese sind ein Aufnahmemikrofon 22 und zur Wiedergabe aufgenommener Schlüsselworte ein Lautsprecher 23 angeschlossen. Die von der Aufnahme-Zentraleinheit 36 aufgenommenen Schlüsselworte können in einem mit der Aufnahme-Zentraleinheit 36 verbundenen Zwischenspeicher 24 gespeichert werden. Zur Kontrolle der Betriebsart der Aufnahmevorrichtung 21 (z.B. Aufnehmen, Wiedergeben der Schlüsselworte usw.) hat die Aufnahme-Zentraleinheit 36 ein Bedienfeld 25 mit mehreren nicht dargestellten Bedientasten. Die jeweilige Betriebsart der Aufnahme-Zentraleinheit 36 läßt sich über ein in diese integriertes Display 27 ablesen.

Die Stromversorgung der Sprachsteuerungsvorrichtung 14 erfolgt über einen mit der Sprachsteuerungs-Zentraleinheit 17 verbundenen Akkumulator 26, der über eine Ladeelektronik 37 von einer Solarzelleneinheit 32 gespeist wird. Dazu ist die Solarzelleneinheit 32 an einer dem Tageslicht zugänglichen Außenfläche des Briefkastens 1, z.B. an der vorderen Gehäusewand 2a, angebracht.

Die Funktion des sprachgesteuert ver- und entriegelbaren Briefkastens 1 ist wie folgt:

Über die der Aufnahmevorrichtung 21, die zunächst von der Sprachsteuerungs-Zentraleinheit 17 getrennt ist (d.h. Steckkupplung 20 gelöst) kann ein Benutzer über das Aufnahmemikrofon 22 Schlüsselworte eingeben. Mittels des Bedienfelds 25 wird die jeweilige Betriebsart der Aufnahmevorrichtung 21 vorgewählt. Zusätzlich erfolgt über das Bedienfeld 25 die Zuweisung der Ver- bzw. Entriegelungsfunktion, die mit dem jeweiligen Schlüsselwort initiiert werden soll. Die aufgenommenen Schlüsselworte können zur Überprüfung über den Lautsprecher 23 wiedergegeben werden.

Zusätzlich erfolgt mit der Aufnahmevorrichtung 21 eine Überprüfung der Reproduzierbarkeit der Funktionsinitiierung durch ein vorgegebenes Schlüsselwort (Lautähnlichkeitsüberprüfung). Die Aufnahme-Zentraleinheit 36 weist dazu ein in der Zeichnung nicht dargestelltes Spracherkennungsmodul auf. Wird die Aufnahme-Zentraleinheit 36 über das Bedienfeld 25 in die Betriebsart "Reproduzieren" gestellt, kann der Benutzer ein Vergleichswort, das einem schon im Zwischenspeicher 24 abgelegtes Schlüsselwort entsprechen soll, in das Aufnahmemikrofon 22 sprechen. Das Spracherkennungsmodul der Aufnahme-Zentraleinheit 36 überprüft die Lautähnlichkeit des gesprochenen Vergleichsworts mit den im Zwischenspeicher 24 abgelegten Schlüsselworten.

Die Lautähnlichkeitsüberprüfung erfolgt durch zeitabhängige Analyse des Frequenzspektrums des vom Benutzer gesprochenen Vergleichsworts. Ist die Übereinstimmung dieses zeitabhängigen Frequenzspektrums mit dem eines der abgespeicherten Schlüsselworte besser als ein vorgegebener Grenzwert, wird über das in die Aufnahme-Zentraleinheit 36 integrierte Display 27 eine erfolgreiche Reproduzierbarkeit der mit dem Schlüsselwort zu initilerenden Funktion angezeigt. Andernfalls erfolgt über das Display 27 eine Fehlermeldung.

Der Benutzer kann dann entscheiden, ob er zur Verbesserung der Lautähnlichkeit über das Aufnahmemikrofon 22 einen neuen Versuch macht, das betreffende Vergleichswort nochmals einzugeben (z.B. wenn das Vergleichswort undeutlich oder hastig gesprochen war), oder ob er das im Zwischenspeicher 24 abgelegte dazu gehörende Schlüsselwort neu abspeichert (z.B. wenn schon das Schlüsselwort nicht deutlich gesprochen war oder sich die Stimme des Benutzers, z.B. durch Heiserkeit, im Frequenzspektrum verändert hat). Alternativ kann auch der Grenzwert, der die Übereinstimmungstoleranz bei der Lautähnlichkeitsüberprüfung vorgibt, am Sprachmodul der Aufnahmeeinrichtung neu eingestellt werden. Dabei ist es erforderlich, die gleiche Grenzwerteinstellung auch an der Sprachsteuerungs-Zentraleinheit 17 vorzunehmen, um ein gleiches Verhalten beider Einrichtungen bei der Lautähnlichkeitsüberprüfung sicherzustellen.

Über das Bedienfeld 25 mit Schlüsselworten belegbare Funktionen sind insbesondere:
Das dauerhafte Ver- bzw. Entriegeln der Einwurfklappe 3;
das zeitweise Ver- bzw. Entriegeln der Einwurfklappe 3;
das dauerhafte Ver- bzw. Entriegeln der Entnahmetür 4; und
das zeitweise Ver- bzw. Entriegeln der Entnahmetür 4.

Nach erfolgreicher Lautähnlichkeitsüberprüfung der Schlüsselworte wird die Aufnahme-Zentraleinheit 36 über die Steckkupplung 20 mit der Sprachsteuerungs-Zentraleinheit 17 verbunden. Über das Bedienfeld 25 wird nun die Belegung des Schlüsselwortspeichers 19 der Sprachsteuerungs-Zentraleinheit 17 mit den im Zwischenspeicher 24 abgelegten Schlüsselworten ausgelöst. Nach erfolgter Belegung ist die Sprachsteuerung-Zentraleinheit 17 durch das in diese integriertes Spracherkennungsmodul 35, das baugleich zu demjenigen der Aufnahmeeinrichtung 21 ist, in der Lage, anhand von in das Mikrofon 18 gesprochenen Worten die gleiche Schlüsselwort-Funktionszuweisung durchzuführen wie die Aufnahme-Zentraleinheit 36. Die Aufnahme-Zentraleinheit 36 kann dann abgesteckt werden und der sprachgesteuert ver- bzw. entriegelbare Briefkasten ist einsatzbereit.

Folgende Verwendungsmöglichkeiten des sprachgesteuert ver- und entriegelbaren Briefkastens sind dann möglich:

Statt einer Ver- bzw. Entriegelung der Entnahmetür 4 mit einem Schlüssel kann die Entnahmetür 4 des sprachgesteuerten Briefkastens 1 über Schlüsselworte ver- bzw. entriegelt werden. Dazu spricht der Benutzer in das Mikrofon 18 das Vergleichswort zu dem Schlüsselwort, dessen Funktion vorher mit Hilfe der Aufnahmeeinrichtung 21 zugewiesen wurde, z.B. "Entnahmetür auf!". Die Entsprechung des gesprochene Vergleichsworts mit dem im Schlüsselwortspeicher 19 abgelegten Schlüsselwort wird über das Spracherkennungsmodul in der Sprachsteuerungs-Zentraleinheit 17 wie oben beschrieben überprüft. Liegt die Entsprechung vor, steuert die Sprachsteuerung Zentraleinheit 17 über die Steuerleitung 16b das Drehglied 13 der Verriegelungseinrichtung 5b der Entnahmeklappe 4 an. Der Riegel 6b, der vorher in der Verriegelungsposition war, wird dann um 90° in die Entriegelungsposition verdreht. Die Entnahmetür 4 kann dann geöffnet werden.

Durch die Belegung der Funktion "Entnahmetür zeitweise entriegeln" mit einem passenden Schlüsselwort (z.B. "Entnahme!" wird erzielt, daß die Entnahmetür 4 nur eine vorbestimmte Zeitspanne entriegelt ist. Dies erspart das zusätzliche Sprechen eines Verriegelungs-Schlüsselwortes. Die Sprachsteuerungs-Zentraleinheit 17 weist hierzu einen geeigneten Zeitgeber (nicht dargestellt auf), der eine vorbestimmte Zeitspanne nach dem Entriegeln über die Steuerleitung 16b die erneute Verriegelung bewirkt.

Eine weitere Verwendungsmöglichkeit des sprachsteuerbaren Briefkastens 1 ist das sprachgesteuerte Verschließen der Einwurfklappe 3, z.B. bei längerer Abwesenheit des Benutzers. Dies erfolgt analog zur obigen Entriegelungssteuerung der Entnahmetür 4 durch Sprechen eines Vergleichsworts, das einem anderen Schlüsselwort entspricht (z.B. "Einwurfklappe zu permanent! "), in das Mikrofon 18. Entsprechend der so initiierten permanenten Verriegelungsfunktion der Einwurfklappe 4 aktiviert die Sprachsteuerungs-Zentraleinheit 17 die Verriegelungsleitung der Steuerleitung 16a und bringt somit den Riegel 6a in der in Figur 2 gezeigten Verriegelungsposition. Ein Öffnen der Einwurfklappe 3 des sprachgesteuerten Briefkastens 1 ist dann so lange nicht möglich, bis durch das Sprechen eines weiteren Vergleichswortes zu einem abgespeicherten Schlüsselwort in das Mikrofon 18 (z.B. "Einwurfklappe auf!") der Riegel 6a wieder in die Entriegelungsposition gestellt wird.

Analog zum oben beschriebenen zeitweisen Entriegeln ist im Rahmen einer derartigen Anwendung natürlich auch ein zeitweises Verriegeln der Einwurfklappe 3 mit einem entsprechend vorgegebenen Schlüsselwort einstellbar.

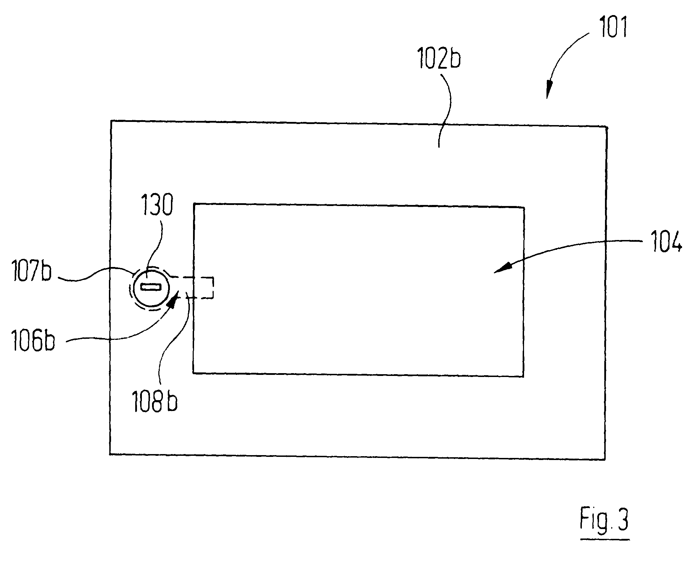

Figur 3 zeigt einen abgewandelten sprachgesteuerten Briefkasten 101. Bauelemente, die denjenigen der Figuren 1 und 2 entsprechen, sind mit um 100 erhöhten Bezugszeichen versehen und werden nicht nochmals im einzelnen beschrieben.

In der Figur 3 ist die hintere Gehäusewand 102b des sprachgesteuerten Briefkastens 101 mit einer Entnahmetür 104 gezeigt. Analog zum Briefkasten 1 weist der Briefkasten 101 Verriegelungseinrichtungen für die Einwurfklappe und die Entnahmetür 104 auf, wobei in Figur 3 der normalerweise nicht sichtbare Riegel 106b der Verriegelungseinrichtung für die Entnahmetür 104 gestrichelt dargestellt ist.

Zusätzlich weist die Entnahmetür 104 des Briefkastens 101 einen Schließzylinder 130 auf, der zu einem Schloß gehört, mit dem die Entnahmetür 104 mittels eines Schlüssels ver- bzw. entriegelt werden kann.

Soll die Entnahmetür 104 durch einen autorisierten Benutzer (d.h. einen Benutzer, der im Besitz eines Schlüssels ist) geöffnet werden, obwohl der Riegel 106b durch die Sprachsteuerungsvorrichtung 14 verschlossen ist, kann dies manuell erfolgen.

Eine derartiges manuell betätigbares Schloß kann natürlich auch für die Einwurfklappe 3 vorgesehen sein.

Eine derartige Möglichkeit zur manuellen Ver- bzw. Entriegelung wird z.B. eingesetzt, wenn der Benutzer das Schlüsselwort vergessen hat oder durch Ausfall des Versorgungsstromes eine sprachgesteuerte Ver- bzw. Entriegelung nicht möglich ist.

Das Spracherkennungsmodul 35 kann eine Reihe alternativer Empfindlichkeitseinstellungen hinsichtlich des Grenzwerts der Übereinstimmung bei der Lautähnlichkeitsüberprüfung der Schlüsselworte haben. Dabei kann der Schwerpunkt der Empfindlichkeit, mit der über die Lautähnlichkeitsüberprüfung die Reproduzierbarkeit der Auslösung einer Funktion durch eine Spracheingabe bestimmt wird, auf der zeitlichen Abfolge der Spracheingabe (Wortsteuerung) oder dem eingegebenen Frequenzspektrum (Stimmsteuerung) liegen. Durch eine schwerpunktmäßige Wortsteuerung kann erreicht werden, daß mehrere Benutzer, die die Schlüsselworte kennen, den Briefkasten 1 bzw. 101 steuern können. Bei einer schwerpunktmäßigen Stimmsteuerung hingegen ist in der Regel nur ein einziger Benutzer zur Sprachsteuerung des Briefkastens 1 bzw. 101 autorisiert.

Es versteht sich, daß anstelle der Stromversorgung der Sprachsteuerungsvorrichtung 14 über die Solarzelleinheit 32 und den Akkumulator 26 jede andere Form der Energieversorgung möglich ist. Alternativ kann die Stromversorgung z.B. über eine auswechselbare Batterie oder eine vom Stromnetz des Gebäudes, an dem der Briefkasten 1 angebracht ist, abgeleitete Stromversorgung erfolgen.

Weiterhin ist klar, daß jede andere Art bekannter Verriegelungseinrichtungen eingesetzt werden kann, die durch ein Stellglied ver- bzw. entriegelt werden kann.

In Fällen, in denen auf eine Wiederbeschreibbarkeit des Schlüsselwortspeichers verzichtet wird, kann dieser ein ROM-Speicher sein. Dieser kann werkseitig mit Schlüsselworten vorbelegt sein, so daß in diesen Fällen eine individuelle Aufnahmeprozedur von Schlüsselworten durch den Benutzer unnötig ist.

## Patentansprüche

1. Sprachgesteuerte Einrichtung mit einer Sprachsteuerungsvorrichtung, die umfaßt: ein Mikrofon, ein Spracherkennungsmodul sowie einen Schlüsselwortspeicher,
dadurch gekennzeichnet, daß
der Schlüsselwortspeicher (19) wiederbeschreibbar ist und daß die Sprachsteuerungsvorrichtung (14) eine Aufnahmevorrichtung (21) zur Aufnahme von Schlüsselwortsequenzen aufweist, die ihrerseits ein Aufnahmemikrofon (22), eine Schlüsselwort-Wiedergabeeinheit (23), ein Bedienfeld (25) und eine Anzeigeeinheit (27) aufweist.

2. Sprachgesteuerte Einrichtung nach Anspruch 1, dadurch gekennzeichnet, daß die Sprachsteuerungsvorrichtung (14) mit der Aufnahmevorrichtung (21) ein in die sprachgesteuerte Einrichtung (1) eingebautes integriertes elektronisches Bauelement bildet.

3. Sprachgesteuerte Einrichtung nach Anspruch 1 oder 2, dadurch gekennzeichnet, daß die Aufnahmevorrichtung (21) ein mit der Sprachsteuerungsvorrichtung (14) steckbar verbundenes Bauelement ist.

4. Sprachgesteuerte Einrichtung nach einem der vorhergehenden Ansprüche, gekennzeichnet durch eine mit der Sprachsteuerungsvorrichtung (14) verbundenen Stromversorgungseinheit mit mindestens einer Solarzelle (32) und mindestens einem Akkumulator (26).

5. Sprachgesteuerte Einrichtung nach einem der vorhergehenden Ansprüche, gekennzeichnet durch ein Gehäuse (2), mindestens eine durch eine Zugangstür oder -klappe (3) verschließbaren Zugangsöffnung und eine Verriegelungseinrichtung (5) für die Zugangstür oder -klappe (3), wobei die Verriegelungseinrichtung (5) durch die Sprachsteuerungsvorrichtung (14) gesteuert ist.

6. Sprachgesteuerte Einrichtung nach Anspruch 5, dadurch gekennzeichnet, daß die Verriegelungseinrichtung (5) zusätzlich manuell betätigbar ist.

7. Sprachgesteuerte Einrichtung nach Anspruch 5 oder 6, dadurch gekennzeichnet, daß sie als Briefkasten (1) ausgeführt ist.
